# EUROPEAN PATENT APPLICATION

(11) **EP 4 148 981 A1**
(43) Date of publication of application: **15.03.2023**
(21) Application number: 21382810.6
(22) Date of filing: 09.09.2021
(51) Int. Cl.: H02S 20/32

(54) **METHOD OF OPERATION OF A BIFACIAL SOLAR TRACKER TO AVOID SHADOW EFFECTS AND SOLAR TRACKER THEREOF**

(71) Applicant: Soltec Innovations, S.L., 30500 Molina de Segura (ES)
(72) Inventor: Ros Gómez, Antonio Fabián, 30500 Molina de Segura (ES); Guerrero Pérez, Javier, 30500 Molina de Segura (ES); Muñoz Benavente, Irene, 30500 Molina de Segura (ES)

(57) **Abstract**

The object of the invention provides a solution to the problem of shadow effects in solar plants equipped with bifacial solar PV panels. The method hereby described is aimed to a solar tracker associated to a bifacial panel, to avoid shadow effects along with a solar tracker controller configured to carry out said method. The method of the invention may be described as an orientation method preferably implemented in the control system of photovoltaic solar trackers for bifacial panels. The control system processes the input data (ground albedo, time, etc.) to determine the angle at which each of the solar trackers should be positioned. The bifacial photovoltaic panels are oriented in the plane determined by the algorithm, which optimizes the energy produced.

## Description

### OBJECT OF THE INVENTION

The invention hereby provided belongs to the field of conversion of solar energy into electrical power by means of photovoltaic technologies.

More precisely, the object of the invention lies in the technical field of bifacial solar panels that can be oriented around an axis of rotation and whose photovoltaic device has two-sided technology, with a productive front face facing the sun and an equally productive underside facing the ground. The front face benefits from so-called incident solar radiation, which corresponds to direct and / or diffuse solar radiation, which comes from the sky, while the back face benefits from solar radiation reflected by the ground, generally called albedo.

### BACKGROUND

In solar technologies, it is common to control the orientation of solar trackers on a so-called direct orientation based on an astronomical calculation of the position of the sun, for real-time positioning oriented to the sun.

However, relying on such a direct orientation only has a major drawback by offering a captured radiation deficit in certain meteorological conditions, and in cloudy conditions, when diffuse radiation percentage increases. Diffuse solar radiation occurs when direct solar radiation disperses in clouds and airborne particles. Diffuse solar radiation results from the diffraction of light by clouds and various molecules suspended in the atmosphere. Diffuse solar radiation therefore does not necessarily follow the direction defined by the sun towards the observation point on the Earth's surface.

Another drawback of solar trackers working with direct sun orientation is the shadow they cast on each other when sun's height is low, during the hours closest to sunset and sunrise.

In addition, with a two-sided technology photovoltaic device, an orientation of the solar tracker on a direct orientation will not necessarily result in maximum energy efficiency on the backside of the photovoltaic device, depending on the albedo and diffuse radiation.

US2019204405A1 discloses a method for controlling the orientation of a solar PV panel including a single-axis solar tracker orientable about an axis of rotation, and a photovoltaic device supported by said tracker and having upper and lower photoactive faces, including: measurement of a distribution of the solar luminance called incident luminance originating from the incident solar radiation coming from the sky to reach the upper face, said distribution being established according to several elevation angles; measurement of a distribution of the solar luminance called reflected luminance originating from the albedo solar radiation corresponding to the reflection of the solar radiation on the ground to reach the lower face, said distribution being established according to several elevation angles; determination of an optimum orientation considering the measurements of said distributions of the incident and reflected solar luminance; servo-control of the orientation of the PV panel on said optimum orientation.

EP3734836 discloses a method for controlling the orientation of a solar panel comprising a mono-axis solar tracker orientable around an axis of rotation, and a photovoltaic device supported by said tracker and having photoactive upper and lower faces, comprising the following steps: - measurement of a distribution of the so-called incident solar luminance resulting from the incident solar radiation coming from the sky to reach the upper face, said distribution being established according to several elevation angles - measurement of a distribution of the so-called reflective solar luminance resulting from albedo solar radiation corresponding to the reflection of solar radiation on the ground to reach the underside, said distribution being established according to several elevation angles; determination of optimum orientation taking into account the measurements of said distributions of incident and reflective solar luminance; - slaving of the orientation of the PV panel to said optimum orientation.

The pitch of bifacial PV panel trackers is an important design factor in maximizing energy gain, proposing a controlling method which allows servo-controlling the solar tracker on an optimum orientation which will consider at the same time the direct radiation, the diffuse radiation and the albedo radiation. To this end, US10852385B2 proposes a method for controlling the orientation of a solar PV panel comprising a single-axis solar tracker orientable about an axis of rotation for an orientation of the solar PV panel allowing following the sun during its rise and its descent from east to west; and a photovoltaic device supported by said solar tracker and having a photoactive upper face facing the sky and provided with photovoltaic cells and a photoactive lower face facing the ground and provided with photovoltaic cells.

WO2019229041 discloses a method for reducing shading in a photovoltaic plant, said photovoltaic plant comprising a plurality of solar trackers, made up of one or more photovoltaic panels, arranged in adjacent parallel rows at a given predetermined distance; an actuator, controlled by a tracker controller, which enables each solar tracker to rotate independently regarding the other solar trackers of the row around said North-South axis; and a control system which comprises a communication network enabling a bidirectional communication between each tracker controller and a central control unit which controls the photovoltaic plant. The method uses an algorithm executed by a processor of the central control unit, which determines a tilt angle (β) for each solar tracker in each row inputted in the algorithm, using constant and variable data of each solar tracker, and by selecting either a first ("Morning") or a second configuration ("Afternoon").

The present invention aims to solve these drawbacks by providing a control method that allows tracking the solar PV panel on optimal orientation considering both the direct radiation, diffuse radiation, and albedo radiation, also avoiding shading between panels and maintaining an unshaded area on the ground that increases the reflected radiation towards the back side.

### DESCRIPTION

The object of the invention provides a method of operation of a solar tracker associated to a bifacial panel, to avoid shadow effects along with a solar tracker controller configured to carry out said method.

The method of the invention may be described as an orientation method preferably implemented in the control system of photovoltaic solar trackers for bifacial panels. The control system processes the input data (ground albedo, time, etc.) to determine the angle at which each of the solar trackers should be positioned. The bifacial photovoltaic panels are oriented in the plane determined by the algorithm, which optimizes the energy produced.

The method of the invention is valid for bifacial PV solar plants with one-axis of rotation, both horizontal and inclined, with any type of soil, any albedo value, and any tracker geometry.

It is capable of optimally harnessing energy if devices to increase the albedo of the soil (Albedo Enhance Material, AEM) are installed in the plant.

It is also an object of the present invention a solar tracker configured to carry out the method for avoiding shadow effects of the invention.

It is also an object of the present invention the same method for those solar trackers which have mechanical restrictions to row movements, such as multi-row or linked trackers.

### DRAWINGS

To complement the description being made and in order to aid towards a better understanding of the characteristics of the invention, in accordance with a preferred example of practical embodiment thereof, a set of drawings is attached as an integral part of said description wherein, with illustrative and non-limiting character, the following has been represented:
Figure 1: Shows a diagram depicting the shadow-free zone, hereafter referred to as the 'shadow exclusion zone'.
Figure 2: Shows a diagram depicting system layout for two trackers in a row and the resulting shadowing scenario.
Figure 3: Shows a diagram depicting *sh_inf* and *sh_sup* parameters.
Figure 4: Shows a diagram depicting a scenario in which the shadow exclusion zone is reduced to better position the sun gap.
Figure 5: Shows a flowchart depicting the functioning of the object of the invention wherein "*β*" is represented by "B".

### DETAILED DESCRIPTION

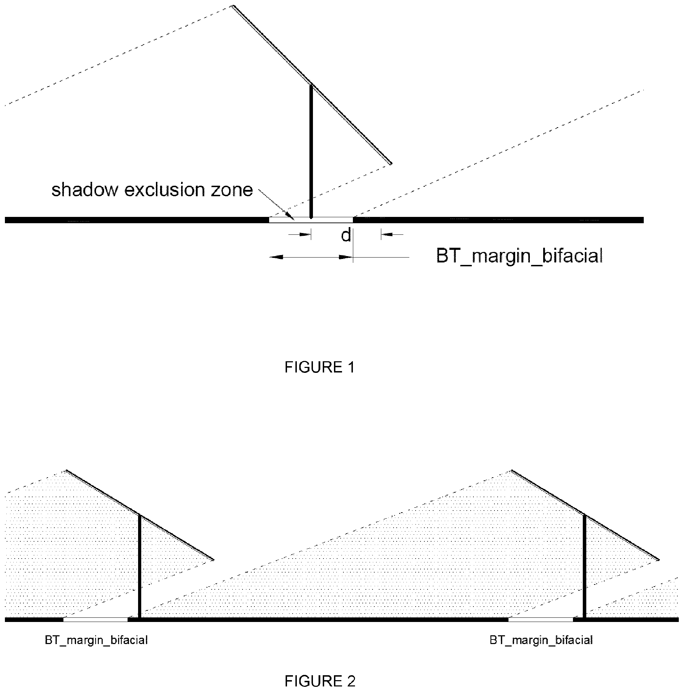

In a preferred embodiment of the object of the invention represented in figures 1 to 5, wherein:
- *sh_inf* = distance on the ground from the axis to the limit of the shadow cast by the lower panel.
- *sh_sup* = distance on the ground from the axis to the limit of the shadow cast by the upper panel.
- *d* = distance on the ground from a solar tracker (1) vertical axis (11) to the limit of the shadow exclusion zone (2).
- *D* = horizontal distance between axes of contiguous solar trackers (1), namely pitch.

Being d the distance on the ground from the solar tracker (1) vertical axis (11) to the limit of the shadow exclusion zone (2), being d dependent on parameters such as: PV panel geometry, albedo, etc., and being *BT_margin_bifacial* the minimum distance on the ground between the shadows of two contiguous solar trackers (for practical purposes, it may be assumed as the width of the shadow exclusion zone (2)).

Depending on the range in which the solar height is, the final movement of the solar tracker (1) results from a sequential superposition of scenarios in which one of the strategies explained below will be fulfilled.

Sunrise:
In the first moments of the day, with a low solar height, the strategy to be implemented will be: maintain a minimum distance of *BT_margin_bifacial* between the shadows projected by two contiguous trackers in the E-W direction (see figure 2).

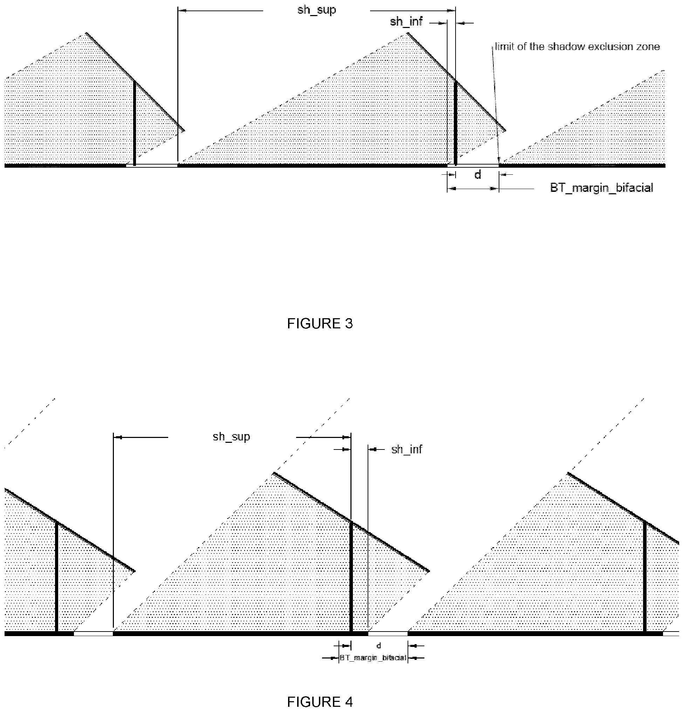

As the morning progresses and the sun rises, the shadow progressively advances towards the east (in the northern hemisphere). At a certain point, depending on the slope of the terrain with respect to the tracker to the west, it reaches a shadow exclusion zone limit (21), as shown in figure 3, where the use of energy reflected on the ground is maximized. Should the same movement strategy to be maintained from this point on, the sun gap would leave the desired area and move towards the corridors, where the reflected energy gain is less. Therefore, when reaching a shadow exclusion zone limit (21), and in order to maximize the reflected energy, the solar tracker (1) movement strategy is changed, and its position is calculated to keep the sun gap within the shadow exclusion zone (2). The sun gap may be reduced (that is *sun gap < BT_margin_bifacial*), but it is better positioned (see figure 4).

Sunset:
In the case of sunset, the same is done, but considering the slope of the terrain with respect to the tracker to the east (in the northern hemisphere).

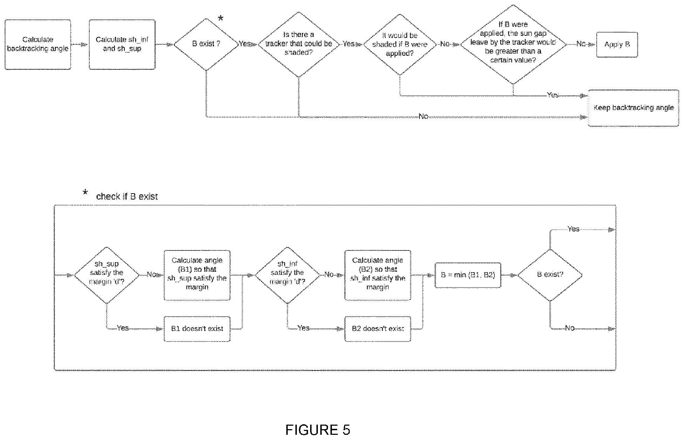

As per the flowchart of figure 5, the object of the invention may be carried out by the following steps:
1. Calculating the initial backtracking angle, being the initial backtracking angle an angle value that avoids shadows between solar trackers (1).
2. Calculating *sh_inf* and *sh_sup* distances.
3. Checking:
   3.1. Is the value of the backtracking angle *β* updated? (see subprocess below).
      - In case of negative answer, the initial backtracking angle will be kept.
      - If the answer is yes. Then check:
   3.2. Is there a solar tracker (1) that could be shaded? that is, arranged behind a solar tracker (1)?
      - In case of negative answer, the initial backtracking angle is maintained.
      - If the answer is yes, then check:
   3.3. Could the tracker be shaded if *β* is to be applied?
      - If the answer is yes, the initial backtracking angle is maintained.
      - In case of negative answer, then check:
   3.4. If *β* is to be applied, would the sun gap left by the tracker be greater than a certain value?
      - If the answer is yes, the initial backtracking angle is maintained.
      - In case of negative answer, *β* applies.
   *β* is calculated according to the following steps, which are sequentially carried out:
   a) determine whether the distance *sh_sup* satisfy the margin d or not, that is, is it within the exclusion zone?
      - In case of negative answer, the angle *β*1 is calculated so that *sh_sup* does satisfy d.
      - If yes, *β*1 does not exist.
   b) determine whether *sh_inf* satisfy the margin d or not, that is, is *sh_inf* within the shadow exclusion zone (2)?
      - In case of negative answer, angle *β*2 is calculated so that *sh_inf* does satisfy *d.*
      - If yes, angle *β*2 does not exist.
   c) determine existence of angle *β* as:
      - angle *β* does not exist when neither angle *β*1 nor angle *β*2 exists.
      - In any other case, angle *β* exists and is equal to the minimum, considering absolute values, between *β*1 and *β*2, both being calculated to try to keep the sun gap within the shadow exclusion zone (2). That is, *β* is equal to the value closest to 0 between *β*1 and *β*2.

## Claims

1. A method of operation of a bifacial solar tracker to avoid shadow effects, the method comprising:
∘ calculating an initial backtracking angle, being said initial backtracking angle an angle value that avoids shadows between consecutively arranged solar trackers (1),
∘ calculating:
▪ *sh_inf* being a distance measured on the ground plane from the axis to the limit of the shadow cast by a lower PV panel,
▪ *sh_sup* being a distance measured on the ground plane from the axis to the limit of the shadow cast by an upper PV panel, and
∘ applying an updated backtracking angle *β* when the following conditions are met:
▪ The new backtracking angle *β* is determined to exist,
▪ there is a solar tracker (1) that is determined to be eventually shaded being arranged behind the solar tracker whose angle is being calculated,
▪ said solar tracker arranged behind the solar tracker whose angle is being calculated, is determined not be shaded if *β* is to be applied, and
▪ if *β* is to be applied, the sun gap left by the solar tracker (1) is determined to be less than a predetermined threshold value, or
∘ maintaining the initial backtracking angle when the former conditions are not met.

2. The method of claim 1 wherein the updated backtracking angle *β* is calculated by:
i. determining whether the distance *sh_sup* satisfy the margin d or not,
▪ if not, an angle *β*1 is geometrically calculated so that *sh_sup* satisfies d; being d a distance on the ground from a solar tracker (1) vertical axis (11) to the limit of a shadow exclusion zone (2), and
▪ if yes, angle *β*1 does not exist.
ii. determining whether *sh_inf* satisfy the margin d or not, that is, is *sh_inf* within a shadow exclusion zone (2):
▪ if not, angle *β*2 is geometrically calculated so that *sh_inf* satisfies d and
▪ if yes, angle *β*2 does not exist.
iii. determine angle *β* to be a minimum between angle *β*1 and angle *β*2, both being calculated keep the sun gap within the shadow exclusion zone (2) wherein*β* is equal to the value closest to 0 between *β*1 and *β*2.

3. A solar tracker controller configured to carry out the method of any one of claims 1 or 2.
